# EUROPEAN PATENT SPECIFICATION

(11) **EP 2 311 760 B1**
(45) Date of publication and mention of the grant of the patent: **23.12.2015**
(21) Application number: 10187180.4
(22) Date of filing: 11.10.2010
(51) Int. Cl.: B65G 65/48

(54) **Dispenser**
Spender
Distributeur

(30) Priority: 13.10.2009 GB 0917897
(43) Date of publication of application: 20.04.2011
(73) Proprietor: Warzynski, Alexander, Duffield Derbyshire DE56 4DT (GB)
(72) Inventor: Warzynski, Alexander, Duffield Derbyshire DE56 4DT (GB)
(74) Representative: Evans, Huw David Duncan

(56) References cited:
- CN-Y- 2 863 727
- GB-A- 468 842
- GB-A- 2 200 892

## Description

The present invention relates to a dispenser.

It is often necessary to dispense a controlled amount of material from a hopper, for example. In order to achieve this it is common to provide a dispenser having an inlet for receiving material from the hopper, an outlet for dispensing material from the dispenser and a rotary valve disposed between the inlet and the outlet for selectively admitting a controlled amount of material from the inlet to the outlet.

The rotary valve typically comprises a plurality of pockets defined by a plurality of walls, disposed around an axle, such that as the axle rotates, material can fill the pockets and pass to the dispenser outlet. However, it has been found that material can pass in an uncontrolled manner from the inlet to the outlet between the rotary valve and a housing of the dispenser, without entering the pockets. Accordingly, the material transferred from the hopper, out from the dispenser is found to vary.

In order to reduce this problem, the rotary valve is caused to pass in close proximity to the interior of the housing to minimise the passage of material between the valve and the housing. However, due to mechanical tolerances, it is often difficult to achieve the required spacing of the rotary valve from the housing. Moreover, the required intimate spacing of the valve from the housing causes the material held within the valve pockets to have an abrasive effect on the housing, as the valve rotates. This can be costly, particularly if the dispenser is required to be replaced and in any event, the abrasion is found to open the spacing between the valve and the housing leading to the original problem.

Each of GB468842, GB2200892 and CN2863727 describe a dispenser in which an adjustable lining is provided to alleviate the aforementioned problems.

We have now devised a dispenser which alleviates the above mentioned problems in a new way. According to the present invention there is a dispenser for dispensing material as stated in the appended claim 1.

Various aspects and features of the present invention are set out in the dependent claims.

According to an example not part of the present invention there is provided a dispenser for dispensing material, the dispenser comprising,
a housing having an inlet and an outlet,
dispensing means disposed within the housing which is arranged to rotate about a rotational axis with respect to the housing to convey material between the inlet and the outlet,
the dispenser further comprising adjustment means for adjusting the position of the dispensing means with respect to the housing to thereby adjust the spacing of the dispensing means from the housing.

The adjustment means thus enables the dispensing means to be repositioned with respect to the housing as required, to accommodate any wear of the housing, and to thus maintain the required spacing between the dispensing means and the housing.

The dispensing means comprises a substantially cylindrical body having a plurality of material holding cells formed therein. The cylindrical body is mounted upon an axle, which extends along a longitudinal axis of the body and which is arranged to extend substantially along the rotational axis. Preferably, the material holding cells extend substantially along the body, substantially parallel to the rotational axis.

According to the invention the axle extends between a first and second axle housing which are disposed upon the dispenser housing. The adjustment means is arranged to adjust the position of the first and second axle housing with respect to the dispenser housing to adjust the position of the dispensing means within the dispenser housing.

Preferably, the adjustment means comprises first and second threaded members which are separately secured at one end to the dispenser housing and at the other end to the first and second axle housing, respectively. The threaded members enable the separation of a peripheral section of the cylindrical body from the dispenser housing and in particular, the inlet of the housing, to be adjusted.

The dispenser preferably further comprises a liner disposed between the dispensing means and the dispenser housing. Preferably, the liner is configured to extend at least part way around the dispensing means.

Preferably, the liner is substantially arcuate in cross-section and is arranged to extend along the dispensing means substantially parallel to the rotational axis.

The liner is preferably reconfigurable between a first configuration in which a radius of curvature of the arcuate liner is greater than a radius of curvature of an outer periphery of the cylindrical body, and a second configuration in which the radius of curvature of the arcuate liner is substantially equal to the radius of curvature of the outer periphery of the cylindrical body.

The liner is preferably secured along a side edge thereof to the housing and is reconfigurable between the first and second configuration using reconfiguration means. Preferably, the reconfiguration means comprises a bolt or similar which is arranged to impinge upon the side edge of the liner substantially opposite the one side edge of the liner, to reduce the radius of curvature of the liner and centre the radius of curvature substantially at the rotational axis.

The liner preferably comprises first and second liner sections which are arranged to extend from either side of the inlet.

Preferably,
the dispenser further comprising a liner disposed between the dispensing means and the housing, and which is arranged to extend at least part way around the dispensing means, wherein
the liner is reconfigurable between a first configuration in which the liner departs from an outer peripheral contour of the dispensing means and a second configuration in which the liner substantially conforms to the outer peripheral contour of the dispensing means.

The liner plate thus protects the housing from the abrasive effect of the material and can be reconfigured with respect to the dispensing means to accommodate any wear associated with the liner. The reconfigurable nature of the liner thus enables the required spacing between the dispensing means and the housing to be maintained.

An embodiment of the present invention will now be described by way of example only and with reference to the accompanying drawings, in which:
Figure 1 is a sectional view across a lateral axis of a dispenser according to an embodiment of the present invention; and,
Figure 2 is a sectional view across a longitudinal axis of the dispenser of figure 1.

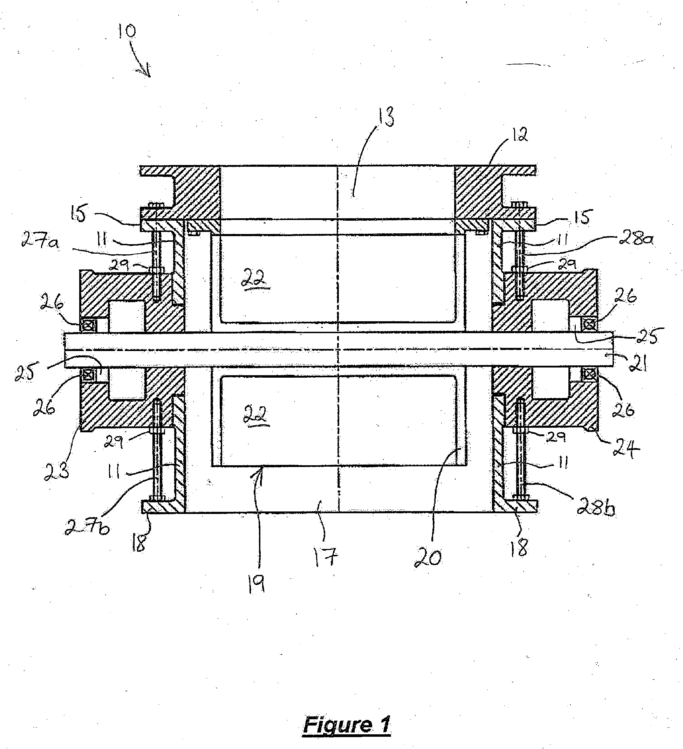

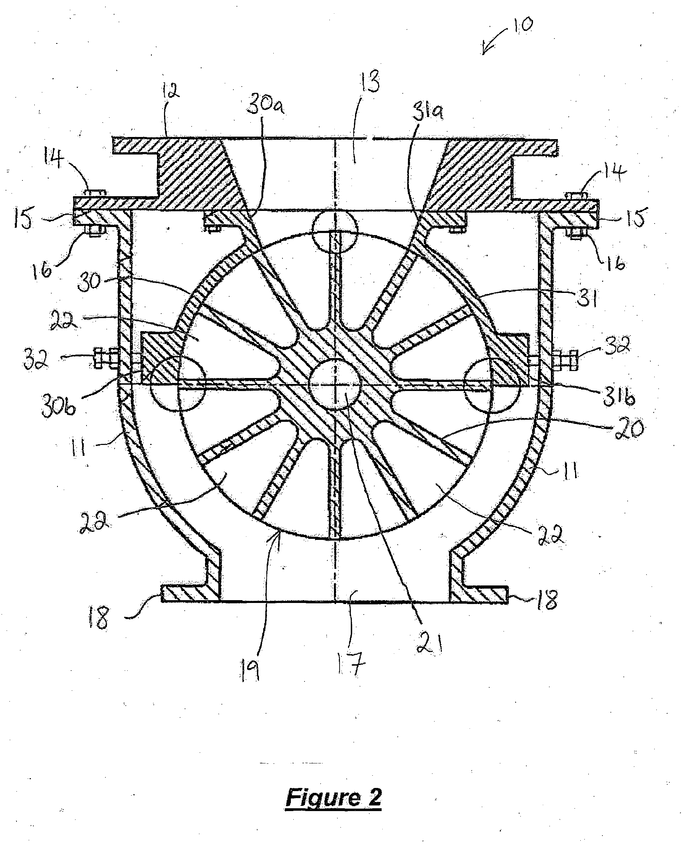

Referring to figures 1 and 2 of the drawings, there is illustrated a sectional view across a lateral and longitudinal axis respectively, of a dispenser 10 according to an embodiment of the present invention. The dispenser 10 comprises a housing 11 that is substantially U-shaped in cross-section as illustrated in figure 2 of the drawings, and comprises a header plate 12 which extends over an upper region of the housing 11 and which defines an elongate inlet 13 to the housing 11, which extends substantially along the length of the housing 11. The header plate 12 is secured upon the housing 11 by a plurality of bolts 14, which extend though the plate 12 and outwardly turned header flanges 15 disposed along each longitudinal upper edge of the housing 11, and subsequently securing a nut 16 upon each bolt 15. The dispenser 10 further comprises an elongate outlet 17 disposed at a base region of the housing 11, which extends along the length of the housing 11 between outwardly turned base flanges 18.

Material is passed from the inlet 13 to the outlet 17 by a rotary valve 19 which comprises a substantially cylindrical body 20 mounted upon an axle 21, which extends substantially along a longitudinal axis of the body 20. The body 20 is arranged to rotate with the axle 21, around a rotational axis which extends substantially along the axle 21 at the centre thereof. The cylindrical body 20 comprises a plurality of material holding cells 22 formed therein, which extend into the body 20 along a radial direction at circumferentially spaced positions around the body 20, and along the body 20, substantially parallel to the rotational axis.

The axle 21 is supported within the dispenser housing 11 by a first and second axle housing 23, 24 which are separately mounted at each longitudinal end of the housing 11. The axle housings 23, 24 comprise an aperture 25 having a bearing race 26 which receives the axle 21 and enables the axle 21 and thus the body 20 to freely rotate within the housing 11. The dispenser 10 further comprises a drive unit (not shown) for driving the axle 21 and thus the cylindrical body 20 at a controlled rotational speed.

The first and second axle housing 23, 24 are mounted upon the dispenser housing 11 by a first and second pair of threaded members 27, 28, respectively. One member 27a, 28a of each pair 27, 28 is separately secured at one end to one of the header flanges 15 and at the other end to an upper region of the respective axle housing 23, 24. The other member 27b, 28b of each pair 27, 28 is separately secured at one end to one of the base flanges 18 and at the other end to an underside of the respective axle housing 23, 24. The threaded members 27, 28 comprise adjustment nuts 29 which are arranged to abut the respective axle housing 23, 24 and permit a linear adjustment of the first and second axle housings 23, 24, substantially within a vertical plane, between the inlet 13 and the outlet 17 and thus an alignment of the axle 21 within the housing 11.

The dispenser 10 further comprises a first and second liner plate 30, 31 which extend longitudinally of the dispenser 10, within the dispenser 10, substantially parallel to the rotational axis of the rotary valve 19. The liner plates 30, 31 are arranged between the dispenser housing 11 and the cylindrical body 20 and are substantially arcuate in cross-section, as illustrated in figure 2 of the drawings.

The first and second liner plate 30, 31 are separately secured along a proximal longitudinal edge 30a, 31a thereof to the header plate 12, either side of the inlet 13. The liner plates 30, 31 are arranged to extend from the header plate 12 along a portion of the outer periphery of the cylindrical body 20 and are reconfigurable between an initial configuration in which a radius of curvature of the plates 30, 31 is greater than the radius of curvature of the outer periphery of the body 20, such that the plates 30, 31 depart from the outer periphery of the body 20, and an operative configuration in which the radius of curvature of the plates 30, 31 substantially matches the radius of curvature of the outer periphery of the body 20.

The distal longitudinal edge 30b, 31 b of each plate 30, 31 is coupled to an adjustment bolt 32 which extends through the dispenser housing 11. Each adjustment bolt 32 extends substantially transverse to a tangent to the respective plate 30, 31 at the distal longitudinal edge 30b, 31 b, such that as the bolts 32 are screwed into an out of the dispenser housing 11, the radius of curvature of the liner plates 30, 31 varies.

In use, the liner plates 30, 31 are first secured along their respective proximal longitudinal edge 30a, 31 a to the header plate 12, either side of the inlet 13 to the dispenser 10. The position of the rotary valve 19 with respect to the liner plates 30, 31 is then adjusted by rotating the adjustment nuts 29 on members 27, 28 so that the first and second axle housings 23, 24 move relative to the dispenser housing 11, so as to reduce the separation of the outer periphery of the cylindrical body 20 from the proximal longitudinal edge 30a, 31 a of the liner plates 30, 31.

Once the valve 19 has been suitably aligned with respect to the proximal longitudinal edge 30a, 31a of the liner plates 30, 31, the adjustment bolts 32 are then screwed into the housing 11 so as to reduce the radius of curvature of the liner plates 30, 31 and centre the radius of curvature upon the rotational axis, so that the liner plates 30, 31 substantially conform to the outer periphery of the cylindrical body 20 and substantially close at least one material holding cell 22.

The dispenser 10 may then be secured to the underside of a hopper (not shown) and material passed in a controlled manner from the inlet 13 to the outlet 17 by rotating the valve 19. As the valve 19 rotates, material falls from the hopper (not shown) under gravity into the empty cells 22 of the body 20 that become presented to the inlet 13. As the filled cells 22 rotate past a liner plate 30, 31, excess material which extends above the cell 22 becomes moved off the cell 22 so as to regulate the amount of material in each cell 22.

The material is held off the housing 11 as the valve 19 rotates by the liner plates 30, 31 and so any abrasion or wear will take place upon the liner plates 30, 31, as opposed to the housing 11. As the wear develops, the threaded members 27, 28 and/or adjustment bolts 32 may be further rotated to reposition the rotary valve 19 with respect to the liner plates 30, 31 to maintain an intimate relation between the body 20 and the liner 30, 31 and thus prevent any material passing from the inlet 13 to the outlet 17 within the spacing between the outer periphery of the body 20 and the liner plates 30, 31.

From the foregoing therefore, it is evident that the dispenser of the present invention provides a simple yet effective means of aligning a rotary valve within a housing and minimising wear on the housing through material abrasion.

## Claims

1. A dispenser (10) for dispensing material, the dispenser comprising,
a housing (11) having an inlet (13) and an outlet (17),
dispensing means (19) disposed within the housing (11) which is arranged to rotate about a rotational axis with respect to the housing (11) to convey material between the inlet (13) and the outlet (17),
the dispenser (19) further comprising adjustment means (27, 28, 29) for adjusting the position of the dispensing means (19) with respect to the housing (11) to thereby adjust the spacing of the dispensing means (19) from the housing (11),
wherein the dispensing means (19) comprises a substantially cylindrical body having a plurality of material holding cells (22) formed therein, and
wherein the cylindrical body is mounted upon an axle (21), which extends along a longitudinal axis of the body and which is arranged to extend substantially along the rotational axis, and
wherein the axle (21) extends between a first and second axle housing (23, 24) which are disposed upon the dispenser housing (11), and
wherein the adjustment means (27, 28,29) is arranged to adjust the position of the first and second axle housing (23, 24) with respect to the dispenser housing to adjust the position of the dispensing means (19) within the dispenser housing (11).

2. A dispenser according to claim 1, wherein the material holding cells (22) extend substantially along the body, substantially parallel to the rotational axis.

3. A dispenser according to claim 1, wherein the adjustment means (27, 28, 29) comprises first and second threaded members which are separately secured at one end to the dispenser housing (11) and at the other end to the first and second axle housing (23, 24), respectively.

4. A dispenser according to any preceding claim, wherein the dispenser further comprises a liner (30, 31) disposed between the dispensing means (19) and the dispenser housing (11).

5. A dispenser according to claim 4, wherein the liner (30, 31) is configured to extend at least part way around the dispensing means (19).

6. A dispenser according to claim 4 or 5, wherein the liner (30, 31) is substantially arcuate in cross-section and is arranged to extend along the dispensing means (19) substantially parallel to the rotational axis.

7. A dispenser according to claim 4, wherein the liner (30, 31) is reconfigurable between a first configuration in which a radius of curvature of the liner is greater than a radius of curvature of an outer periphery of the cylindrical body, and a second configuration in which the radius of curvature of the liner is substantially equal to the radius of curvature of the outer periphery of the cylindrical body.

8. A dispenser according to claim 7, wherein the liner (30, 31) is secured along a side edge thereof to the housing (11) and is reconfigurable between the first and second configuration using reconfiguration means (32).

9. A dispenser according to claim 8, wherein the reconfiguration means (32) comprises a bolt or similar which is arranged to impinge upon the side edge of the liner substantially opposite the one side edge of the liner, to reduce the radius of curvature of the liner and centre the radius of curvature substantially at the rotational axis.

10. A dispenser according to any of claims 4 to 9, further comprising first and second liner sections which are arranged to extend from either side of the inlet (13).

11. A dispenser according to claim 1, wherein the dispenser (10) further comprises a liner (30, 31) disposed between the dispensing means (19) and the housing (11), and which is arranged to extend at least part way around the dispensing means (19),
and wherein the adjustment means (27, 28, 29) adjusts the position of the dispensing means (19) with respect to the liner (30. 31) to thereby adjust the spacing of the dispensing means (19) from the liner (30, 31), wherein
the liner (30, 31) is reconfigurable between a first configuration in which the liner (30, 31) departs from an outer peripheral contour of the dispensing means (19) and a second configuration in which the liner (30, 31) substantially conforms to the outer peripheral contour of the dispensing means (19).

## Patentansprüche

1. Spender (10) zum Abgeben von Material, wobei der Spender Folgendes umfasst, ein Gehäuse (11) mit einem Einlass (13) und einem Auslass (17),
ein Abgabemittel (19), das in dem Gehäuse (11) angeordnet und so eingerichtet ist, dass es sich um eine Drehachse in Bezug auf das Gehäuse (11) dreht, um Material zwischen dem Einlass (13) und dem Auslass (17) zu befördern,
wobei der Spender (19) ferner Einstellmittel (27, 28, 29) zum Einstellen der Position des Abgabemittels (19) in Bezug auf das Gehäuse (11) umfasst, um dadurch den Abstand des Abgabemittels (19) von dem Gehäuse einzustellen (11),
wobei das Abgabemittel (19) einen im Wesentlichen zylindrischen Körper umfasst, in dem eine Vielzahl von Materialhaltezellen (22) gebildet ist, und
wobei der zylindrische Körper auf einer Achse (21) angeordnet ist, die sich entlang einer Längsachse des Körpers erstreckt und so angeordnet ist, dass sie sich im Wesentlichen entlang der Drehachse erstreckt, und
wobei sich die Achse (21) zwischen einem ersten und zweiten Achsengehäuse (23, 24) erstreckt, die auf dem Spendergehäuse (11) angeordnet sind, und
wobei das Einstellmittel (27, 28, 29) so angeordnet ist, dass es die Position des ersten und zweiten Achsengehäuses (23, 24) in Bezug auf das Spendergehäuse einstellt, um die Position des Abgabemittels (19) in dem Spendergehäuse einzustellen (11).

2. Spender nach Anspruch 1, wobei sich die Materialhaltezellen (22) im Wesentlichen entlang dem Körper und im Wesentlichen parallel zur Drehachse erstrecken.

3. Spender nach Anspruch 1, wobei das Einstellmittel (27, 28, 29) ein erstes und zweites Gewindeelement umfasst, die jeweils an einem Ende an dem Spendergehäuse (11) und am anderen Ende an dem ersten und dem zweiten Achsgehäuse (23, 24) getrennt befestigt sind.

4. Spender nach einem der vorhergehenden Ansprüche, wobei der Spender ferner eine Auskleidung (30, 31) umfasst, die zwischen dem Abgabemittel (19) und dem Spendergehäuse (11) angeordnet ist.

5. Spender nach Anspruch 4, wobei die Auskleidung (30, 31) so konfiguriert ist, dass sie sich mindestens teilweise um das Abgabemittel (19) erstreckt.

6. Spender nach Anspruch 4 oder 5, wobei die Auskleidung (30, 31) im Querschnitt im Wesentlichen bogenförmig ist und so angeordnet ist, dass sie sich entlang des Abgabemittels (19) im Wesentlichen parallel zur Drehachse erstreckt.

7. Spender nach Anspruch 4, wobei die Auskleidung (30, 31) zwischen einer ersten Konfiguration, in der ein Krümmungsradius der Auskleidung größer ist als ein Krümmungsradius des Außenumfangs des zylindrischen Körpers, und einer zweiten Konfiguration, in der der Krümmungsradius der Auskleidung im Wesentlichen dem Krümmungsradius des Außenumfangs des zylindrischen Körpers entspricht, erneut konfiguriert werden kann.

8. Spender nach Anspruch 7, wobei die Auskleidung (30, 31) entlang einer Seitenkante davon an dem Gehäuse (11) befestigt ist und zwischen der ersten und zweiten Konfiguration mit Hilfe eines Rekonfigurationsmittels (32) erneut konfiguriert werden kann.

9. Spender nach Anspruch 8, wobei das Rekonfigurationsmittel (32) einen Bolzen oder ähnliches umfasst, der so angeordnet ist, dass er auf die Seitenkante der Auskleidung im Wesentlichen gegenüber der einen Seitenkante der Auskleidung auftrifft, um den Krümmungsradius der Auskleidung zu verringern und den Krümmungsradius im Wesentlichen an der Drehachse zu zentrieren.

10. Spender nach einem der Ansprüche 4 bis 9, der ferner erste und zweite Auskleidungsabschnitte umfasst, die so angeordnet sind, dass sie sich von beiden Seiten des Einlasses (13) erstrecken.

11. Spender nach Anspruch 1, wobei der Spender (10) ferner eine Auskleidung (30, 31) umfasst, die zwischen dem Abgabemittel (19) und dem Gehäuse (11) angeordnet ist und so angeordnet ist, dass sie sich mindestens teilweise um das Abgabemittel (19) erstreckt,
und wobei das Einstellmittel (27, 28, 29) die Position des Abgabemittels (19) in Bezug auf die Auskleidung (30, 31) einstellt, um dadurch den Abstand des Abgabemittels (19) von der Auskleidung (30, 31) einzustellen, wobei
die Auskleidung (30, 31) zwischen einer ersten Konfiguration, bei der die Auskleidung (30, 31) eine Außenumfangskontur des Abgabemittels (19) verlässt, und einer zweiten Konfiguration, bei der sich die Auskleidung (30, 31) im Wesentlichen an die Außenumfangskontur des Abgabemittels (19) anpasst, erneut konfiguriert werden kann.

## Revendications

1. Un distributeur (10) destiné à la distribution de matériau, le distributeur comprenant :
un logement (11) possédant une admission (13) et une sortie (17),
un moyen de distribution (19) disposé à l'intérieur du logement (11) qui est agencé de façon à pivoter autour d'un axe de rotation par rapport au logement (11) de façon à acheminer un matériau entre l'admission (13) et la sortie (17),
le distributeur (19) comprenant en outre un moyen d'ajustement (27, 28, 29) destiné à l'ajustement de la position du moyen de distribution (19) par rapport au logement (11) de façon à ainsi ajuster l'espacement du moyen de distribution (19) à partir du logement (11),
où le moyen de distribution (19) comprend un corps sensiblement cylindrique possédant une pluralité de cellules de stockage de matériau (22) formées dans celui-ci, et
où le corps cylindrique est monté sur un essieu (21), qui s'étend le long d'un axe longitudinal du corps et qui est agencé de façon à s'étendre sensiblement le long de l'axe de rotation, et
où l'essieu (21) s'étend entre un premier et un deuxième logements d'essieu (23, 24) qui sont disposés sur le logement du distributeur (11), et
où le moyen d'ajustement (27, 28, 29) est agencé de façon à ajuster la position des premier et deuxième logements d'essieu (23, 24) par rapport au logement du distributeur de façon à ajuster la position du moyen de distribution (19) à l'intérieur du logement du distributeur (11).

2. Un distributeur selon la Revendication 1, où les cellules de stockage de matériau (22) s'étendent sensiblement le long du corps, sensiblement parallèlement à l'axe de rotation.

3. Un distributeur selon la Revendication 1, où le moyen d'ajustement (27, 28, 29) comprend un premier et un deuxième éléments filetés qui sont fixés séparément au niveau d'une extrémité au logement du distributeur (11) et au niveau de l'autre extrémité aux premier et deuxième logements d'essieu (23, 24), respectivement.

4. Un distributeur selon l'une quelconque des Revendications précédentes, où le distributeur comprend en outre une chemise (30, 31) disposée entre le moyen de distribution (19) et le logement du distributeur (11).

5. Un distributeur selon la Revendication 4, où la chemise (30, 31) est configurée de façon à s'étendre au moins partiellement autour du moyen de distribution (19).

6. Un distributeur selon la Revendication 4 ou 5, où la chemise (30, 31) est sensiblement arquée en section transversale et est agencée de façon à s'étendre le long du moyen de distribution (19) sensiblement parallèlement à l'axe de rotation.

7. Un distributeur selon la Revendication 4, où la chemise (30, 31) est reconfigurable entre une première configuration dans laquelle un rayon de courbure de la chemise est supérieur à un rayon de courbure d'une périphérie extérieure du corps cylindrique, et une deuxième configuration dans laquelle le rayon de courbure de la chemise est sensiblement égal au rayon de courbure de la périphérie extérieure du corps cylindrique.

8. Un distributeur selon la Revendication 7, où la chemise (30, 31) est fixée le long d'un bord latéral de celui-ci au logement (11) et est reconfigurable entre les première et deuxième configurations au moyen d'un moyen de reconfiguration (32).

9. Un distributeur selon la Revendication 8, où le moyen de reconfiguration (32) comprend un écrou ou un élément similaire qui est agencé de façon à empiéter sur le bord latéral de la chemise sensiblement à l'opposé du bord latéral de la chemise, de façon à réduire le rayon de courbure de la chemise et à centrer le rayon de courbure sensiblement au niveau de l'axe de rotation.

10. Un distributeur selon l'une quelconque des Revendications 4 à 9, comprenant en outre une première et une deuxième sections de chemise qui sont agencées de façon à s'étendre à partir de l'un ou l'autre côté de l'admission (13).

11. Un distributeur selon la Revendication 1, où le distributeur (10) comprend en outre une chemise (30, 31) disposée entre le moyen de distribution (19) et le logement (11) et qui est agencée de façon à s'étendre au moins partiellement autour du moyen de distribution (19),
et où le moyen d'ajustement (27, 28, 29) ajuste la position du moyen de distribution (19) par rapport à la chemise (30. 31) de façon à ainsi ajuster l'espacement du moyen de distribution (19) à partir de la chemise (30, 31), où
la chemise (30, 31) est reconfigurable entre une première configuration dans laquelle la chemise (30, 31) s'éloigne d'un contour périphérique extérieur du moyen de distribution (19) et une deuxième configuration dans laquelle la chemise (30, 31) épouse sensiblement le contour périphérique extérieur du moyen de distribution (19).
